(19) Europäisches Patentamt
European Patent Office
Office européen des brevets

(11) **EP 2 244 171 A2**

## (12) EUROPEAN PATENT APPLICATION

(43) Date of publication:
**27.10.2010 Bulletin 2010/43**

(51) Int Cl.:
***G06F 3/044*** (2006.01)

(21) Application number: **10160504.6**

(22) Date of filing: **20.04.2010**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**
Designated Extension States:
**AL BA ME RS**

(30) Priority: **22.04.2009 JP 2009103495**
**25.11.2009 JP 2009267325**

(71) Applicant: **Hitachi Displays, Ltd.**
**Mobara-shi**
**Chiba (JP)**

(72) Inventors:
- **Sekiguchi, Shinji**
  **Tokyo 100-8220 (JP)**
- **Nagata, Koji**
  **Tokyo 100-8220 (JP)**
- **Hayakawa, Kouji**
  **Tokyo 100-8220 (JP)**
- **Mamba, Norio**
  **Tokyo 100-8220 (JP)**

(74) Representative: **Thesen, Michael**
**Beetz & Partner**
**Patentanwälte**
**Steinsdorfstraße 10**
**80538 München (DE)**

(54) **Input device and display device having the same**

(57) An electrostatic capacitive coupling-type touch panel is provided which interacts not only with a finger-based input but also with a touch using non-conductive input means. The touch panel includes coordinate detection electrodes (XP1 - XP4, YP1 - YP4) for detecting XY position coordinates and transparent Z electrodes. The Z electrodes are arranged over the coordinate detection electrodes (XP1 - XP4, YP1 - YP4) at certain intervals with spacers (4) disposed therebetween. An elastic layer (5) that is deformed along the shape of the spacers (4) by compressive force resulting from touch pressing presses the Z electrodes.

FIG.2

**Description**

BACKGROUND OF THE INVENTION

1. Field of the Invention

The present invention relates to an input device for inputting coordinates to a screen and a display device having the same, and more particularly, to a capacitive-coupling input device capable of inputting coordinates using a plastic pen or the like, which is an insulator, and a display device having the same.

2. Description of Related Art

A display device having an input device (hereinafter also referred to as a "touch sensor" or a "touch panel") having an on-screen input function of inputting information to a display screen by a touch operation (a contact and press operation; hereinafter simply referred to as a "touch") with a user's finger or the like is used for mobile electronic devices such as a PDA or a mobile terminal, various home appliances, stationary customer guiding terminals such as an automatic reception machine, and the like. As a method of realizing the input device using touch, there are some known methods including a resistance film method of detecting a change in resistance value of a touched portion, an electrostatic capacitive coupling method of detecting a change in capacitance of the touched portion, and an optical sensor method of detecting a change in light intensity at the portion shaded by the touch.

The electrostatic capacitive coupling method has the following advantages when compared with the resistance film method or the optical sensor method. For example, the resistance film method and the optical sensor method provide transmittance as low as about 80%. On the contrary, the electrostatic capacitive coupling method provides transmittance as high as about 90%, and the displayed image quality is not reduced. In the resistance film method, since the touched position is detected based on a mechanical contact with the resistance film, there is a possibility of deterioration or breakage (cracking) of the resistance film. On the contrary, in the electrostatic capacitive coupling method, the detection electrodes do not come into mechanical contact with other electrodes or the like. Thus, the electrostatic capacitive coupling method is advantageous in durability.

An exemplary electrostatic capacitive coupling method is disclosed in JP-T-2003-511799 (hereinafter referred to as Patent Document 1). According to the disclosed method, vertical detection electrodes (X electrodes) and horizontal detection electrodes (Y electrodes) are arranged in a vertical and horizontal two-dimensional matrix, and the capacitance of each electrode is detected by an input processing unit. When a conductor such as a finger or the like touches the surface of a touch panel, the capacitance of each electrode increases. Thus, the touch is detected by the input processing unit, and the input coordinates are calculated based on a signal indicative of a capacitance change detected by each electrode. Even when the detection electrodes are deteriorated and thus the resistance values which are physical characteristics are changed, they have little influence on the detected capacitance, and thus there is only a little influence on the input position detection accuracy of the touch panel. As a result, high input position detection accuracy can be realized.

Moreover, JP-A-2004-005672 discloses a touch panel in which a polymer layer containing conductive fine particles is formed on the surface of a transparent electrode, thus providing excellent anti-reflection effect and improved transparency.

SUMMARY OF THE INVENTION

However, since the electrostatic capacitive coupling-type touch panel detects the input coordinates based on the capacitance change in each detection electrode as discussed in Patent Document 1, it is required that the input means is made of a conductive material. The conductive material is represented by a human finger, and the electrostatic capacitive coupling-type touch panel is regarded as a finger-input touch panel. For this reason, when a plastic stylus which is a non-conductive insulator and used in the resistance film method or the like is brought into contact with the electrostatic capacitive coupling-type touch panel, almost no capacitance change occurs in the electrode, which disables detection of the input coordinates.

On the other hand, in case that an input operation is made on the electrostatic capacitive coupling-type touch panel using a stylus made of a conductive material such as metal, the number of electrodes need to increase. For example, a case will be considered in which an electrostatic capacitive coupling-type touch panel having a diagonal size of 4 inches and an aspect ratio of 3:4 is realized in a diamond-like electrode shape such as that described in Patent Document 1. Here, when the minimum contact surface of the finger is assumed to be 6 mm in diameter, and the detection electrodes are prepared using this size as the electrode interval, the total number of the electrodes will be 22. On the other hand, the contact surface of the stylus is assumed to be 1 mm in diameter, and when the detection electrodes are prepared using this size as the electrode interval, the total number of the electrodes will be 139, which indicates an increase of about six times. When the number of the electrodes increases, the surface area of a frame necessary for leading wirings out to the input processing unit increases, which also increases the number of signal connections with a control circuit, and consequently the reliability against impact and the like is lowered. Furthermore, since the circuit area also increases due to the increase in the number of terminals of the input processing unit, the costs may also increase. While, when a stylus whose tip is made of a conductive rubber is used, the stylus needs to have a shape that is 6 mm in diameter as its contact surface, assuming that the total number of the electrodes is the same. Thus, users may experience discomfort when inputting characters.

From the above, the electrostatic capacitive coupling-type touch panel disclosed in Patent Document 1 has a problem in dealing with input operations using an insulating material (stylus).

In order to solve the above-mentioned problems, according to a first aspect of the present invention, an electrostatic capacitive coupling-type touch panel according to claim 1 is used, which may include a plurality of transparent X electrodes, a plurality of transparent Y electrodes, and transparent Z electrodes. In the electrostatic capacitive coupling-type touch panel, the X electrodes and the Y electrodes intersect each other with a first insulating layer disposed therebetween and each have a configuration in which a pad part and a thin line part alternate in their extending direction. The pad parts of the X electrodes and the pad parts of the Y electrodes are arranged so as not to overlap each other in plan view. The Z electrodes are arranged over the X electrodes and the Y electrodes with spacers disposed therebetween for maintaining a constant distance and The Z electrodes are deformed along the shape of the spacers by compressive force resulting from touch pressing. In this way, the distance between the Z electrodes and the X electrodes and the distance between the Z electrodes and the Y electrodes are decreased, and accordingly, the electrostatic capacitance therebetween is increased. Therefore, it is possible to detect the coordinates of the touched position with non-conductive input means by detecting a capacitance change between the X and Y electrodes and the Z electrodes (portions where an inter-electrode distance is changed by the pressing).

Moreover, according to a second aspect of the present invention, the Z electrodes may be arranged over the X electrodes and the Y electrodes with a plurality of dot-shaped elastic spacers disposed therebetween for maintaining a constant distance, and the elastic spacers are deformed by compressive force resulting from the touch pressing. The Z electrodes may be arranged with a spongy layer similar to the dot-shaped elastic spacers. However, the spongy layer may cause diffused reflection of light and lead to deterioration in image quality of the display device. Thus, the dot-shaped elastic spacers are preferable. By the elastic spacers, the distance between the Z electrodes and the X electrodes and the distance between the Z electrodes and the Y electrodes are decreased, and accordingly, the electrostatic capacitance therebetween is increased. Moreover, an insulating layer may be provided between the Z electrodes and the X and Y electrodes in order to detect the electrostatic capacitance that changes in response to the decrease in the distance between the Z electrodes and the X electrodes and the distance between the Z electrodes and the Y electrodes. Therefore, by providing an anti-reflection film at an interface between the space (air layer) formed by the elastic spacers and a stacked structure adjacent to the space, the transmittance can be improved and on-screen reflection can be reduced, thus suppressing deterioration in the image quality of the display device. Accordingly, it is possible to detect a capacitance change between the X and Y electrodes and the Z electrodes (portions where an inter-electrode distance is changed by the pressing) with non-conductive input means and thus to identify the coordinates of the touched position.

According to the aspects of the present invention, the electrostatic capacitive coupling-type touch panel allows input operations using not only a finger but also an insulator such as a plastic pen.

BRIEF DESCRIPTION OF THE DRAWINGS

Fig. 1 is a system configuration diagram showing an input device and a display device having the same according to the embodiments of the present invention.

Fig. 2 is a cross-sectional view showing the electrode structure of the touch panel according to a first embodiment of the present invention.

Fig. 3 is a plan view showing the electrode structure of the touch panel according to the embodiments of the present invention.

Figs. 4A and 4B are schematic diagrams showing a capacitance change when an input operation with a plastic pen is made on the touch panel according to the first embodiment of the present invention.

Fig. 5 is a layout diagram of the capacitance detection electrodes of the touch panel according to the embodiments of the present invention.

Fig. 6 is a cross-sectional view showing the electrode structure of the touch panel according to a second embodiment of the present invention.

Fig. 7 is a schematic diagram showing a capacitance change when an input operation with a plastic pen is made on the touch panel according to the second embodiment of the present invention.

Fig. 8 is a cross-sectional view showing the electrode structure of the touch panel according to a third embodiment of the present invention.

Fig. 9 is a schematic diagram showing a capacitance change when an input operation with a plastic pen is made on the touch panel according to the third embodiment of the present invention.

Fig. 10 is a cross-sectional view showing the electrode structure of the touch panel according to a fourth embodiment of the present invention.

Fig. 11 is a schematic diagram showing a capacitance change when an input operation with a plastic pen is made on the touch panel according to the fourth embodiment of the present invention.

Fig. 12 is a cross-sectional view showing the electrode structure of the touch panel according to a fifth embodiment of the present invention.

Figs. 13A to 13C are schematic diagrams showing a capacitance change when an input operation with a plastic pen is made on the touch panel according to the fifth embodiment of the present invention.

Fig. 14 is a cross-sectional view of the touch panel and display device according to the fifth embodiment of the present invention.

Fig. 15 is a cross-sectional view showing the electrode structure of the touch panel according to a sixth embodiment of the present invention.

Fig. 16 is a schematic diagram showing a capacitance change when an input operation with a plastic pen is made on the touch panel according to the sixth embodiment of the present invention.

Fig. 17 is a cross-sectional view of the touch panel and display device according to the sixth embodiment of the present invention.


DETAILED DESCRIPTION OF THE INVENTION

Hereinafter, the embodiments of the present invention will be described in detail with reference to the drawings.


[First Embodiment]

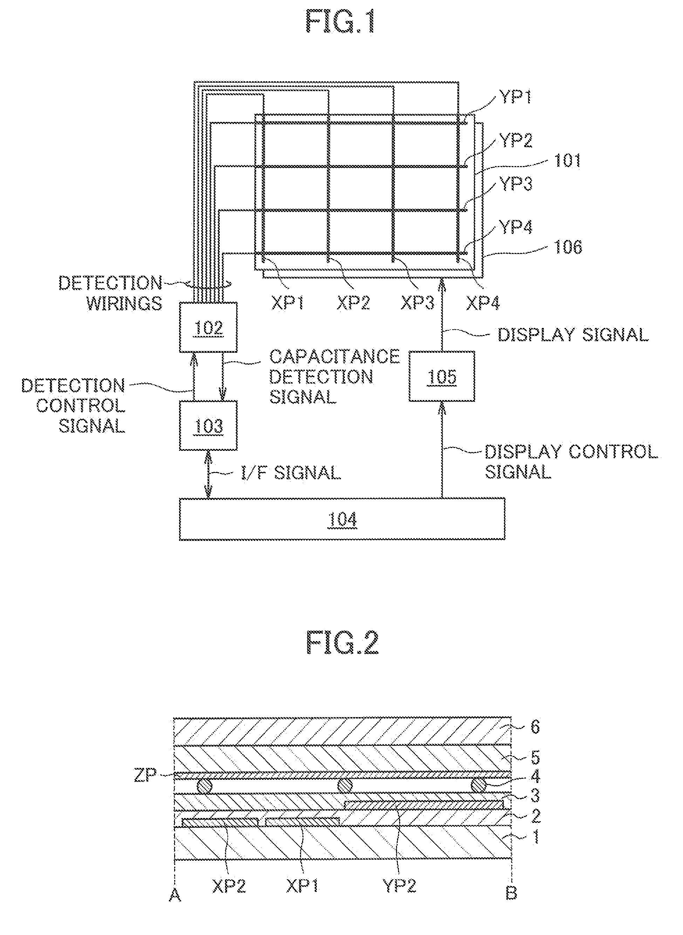

The configuration of an input device (hereinafter referred to as a touch panel) and a display device having the same is shown in Fig. 1.

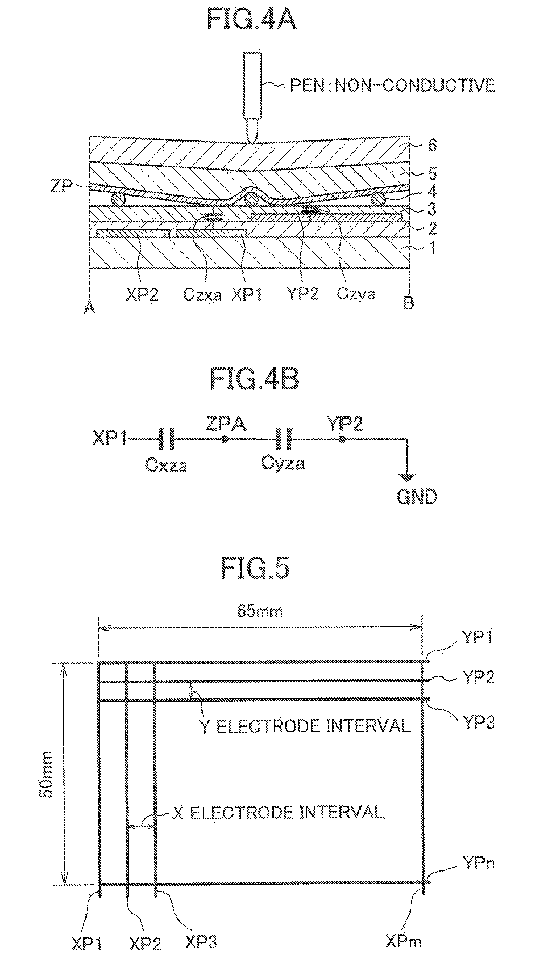

In Fig. 1, reference numeral 101 denotes a touch panel according to the embodiments of the present invention. The touch panel 101 includes X and Y electrodes XP and YP for capacitance detection. Although four X electrodes XP1 to XP4 and four Y electrodes YP1 to YP4 are shown in this example, the number of the electrodes is not limited to this. Fig. 5 shows a layout diagram of the X and Y electrodes for capacitance detection of a touch panel that has a diagonal size of 4 inches (its aspect ratio is assumed to be 3:4), for example.

The touch panel 101 is installed on a front face of a display portion 106 of the display device. It is therefore desirable for the touch panel 101 to have high transmittance since when a user views an image displayed on the display device, the displayed image must be transmitted through the touch panel 101. The X and Y electrodes of the touch panel 101 are connected to a capacitance detection portion 102 via detection wirings. The capacitance detection portion 102 is controlled based on a detection control signal output from an arithmetic and control unit 103 to detect capacitance of each electrode (each of the X and Y electrodes) included in the touch panel 101 and output a capacitance detection signal changing depending on the capacitance of each electrode to the arithmetic and control unit 103. The arithmetic and control unit 103 calculates a signal component of each electrode from the capacitance detection signal of each electrode and calculates input coordinates from the signal component of each electrode. Upon receiving the input coordinates from the touch panel 101 in response to a touch operation, a system 104 generates a display image corresponding to the touch operation and transfers the display image to a display control circuit 105 as a display control signal. The display control circuit 105 generates a display signal according to the display image transferred as the display control signal and displays an image on the display device.

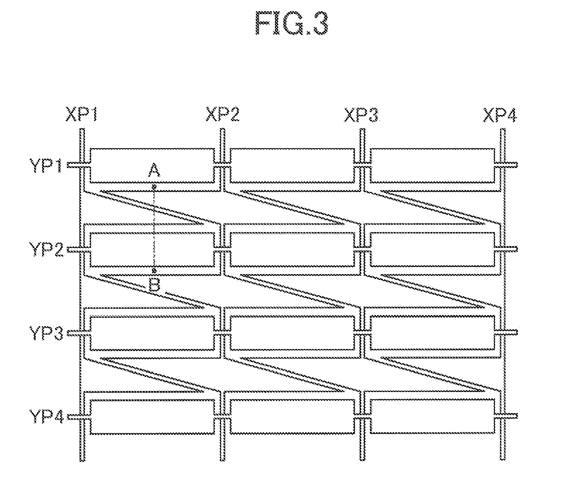

Fig. 2 is a configuration diagram of the touch panel 101 according to a first embodiment of the present invention and shows the sectional shape of the touch panel 101 taken along the line A-B in Fig. 3. This sectional view shows only the layers that are necessary for description of the touch panel operation. In the figure, reference numerals 1 and 6 each denote a transparent substrate, 2 and 3 each denote a transparent insulating film, 4 denotes spacers, 5 denotes a transparent elastic layer, and XP, YP, and ZP each denote a detection electrode.

The touch panel 101 of the present embodiment has a stacked structure in which a transparent conductive film XP, a first transparent insulating film 2, a transparent conductive film YP, a second transparent insulating film 3, non-conductive spacers 4 for maintaining a distance to a Z electrode, the Z electrode ZP which is a conductive layer, a transparent elastic layer 5, and a second transparent substrate 6 are successively stacked in that order on a first transparent substrate 1. The transparent elastic layer 5 is less rigid than the second transparent substrate 6.

Fig. 3 shows the electrode pattern of the capacitance detection X and Y electrodes XP and YP of the touch panel 101. The X and Y electrodes XP and YP are connected to the capacitance detection portion 102 via detection wirings. The Y electrodes extend in the horizontal direction of the touch panel 101, and a plurality of the Y electrodes is arranged in the vertical direction thereof. At each intersection of the Y and X electrodes, the width of each of the Y and X electrodes is decreased so as to reduce the capacitance at the intersection of each electrode. This portion will be referred to as a thin line part. Thus, the Y electrodes each have a shape in which the thin line part and the remaining electrode part (hereinafter referred to as a pad part) alternate in the extending direction thereof. Between the adjacent Y electrodes are disposed the X electrodes. The X electrodes extend in the vertical direction of the touch panel 101, and a plurality of the X electrodes are arranged in the horizontal direction. Similar to the Y electrodes, the X electrodes each have a shape in which the thin line part and the pad part alternate in the extending direction thereof.

In the following, when describing the shape of the pad part of the X electrode, it will be assumed that the position of a wiring (or the thin line part of the X electrode) for connecting the X electrode to the detection wiring is the horizontal center of the X electrode. The pad part of the X electrode has such a shape that its surface area decreases as it becomes closer to the center of the adjacent X electrode while increasing as it becomes closer to the center of the X electrode. Thus, regarding the surface area of the X electrode between the two adjacent X electrodes such as the electrodes XP1 and XP2, the surface area of the pad part of the electrode XP1 becomes the largest in the vicinity of the center of the electrode XP1, whereas the surface area of the pad part of the electrode XP2 becomes the smallest. On the other hand, in the vicinity of the center of the electrode XP2, the surface area of the pad part of the electrode XP1 becomes the smallest, whereas the surface area of the pad part of the electrode XP2 becomes the largest.

Next, the layer structure of the touch panel 101 will be described in the order of the layers stacked closer on the first transparent substrate 1. The material, thickness, and the like of the first transparent substrate 1 are not particularly limited and can be selected according to the purpose of use. Preferably, the material is selected from inorganic glasses such as barium borosilicate glass or soda glass, chemically reinforced glasses, and resin films such as polyethersulfone (PES), polysulfone (PSF), polycarbonate (PC), polyarylate (PAR), or polyethylene terephthalate (PET). Moreover, the X and Y electrodes XP and YP are formed by a transparent conductive film but are not particularly limited as long as they are thin films having conductive properties. The transparent conductive film can be made of existing materials such as indium tin oxide (ITO), antimony tin oxide (ATO), or indium zinc oxide (IZO). The transparent conductive film (thickness: 50 to 200 Å) is formed by a sputtering method so as to have surface resistance of 500 to 2000 Ω, followed by deposition of resist materials and patterning with exposure and developing processes. In this case, the resist materials may be positive or negative types and can be easily formed if they are alkali developing types. Thereafter, the ITO pattern is formed by etching. In this case, as an etching solution, hydrobromic acid solution or the like can be used.

The X electrodes XP are formed at the proximity of the first transparent substrate 1, and then, the first insulating film 2 for insulating the X electrodes and the Y electrodes is formed. Then, the Y electrodes YP are formed. In this case, the order of the X electrodes XP and the Y electrodes YP may be reversed. Subsequently to the Y electrodes YP, the second insulating film 3 is formed. The thickness of the first and second insulating films 2 and 3 for ensuring insulation between the Y electrodes YP and the Z electrodes ZP provided later is appropriately selected considering the dielectric constant of the insulating film materials. The relative dielectric constant can be 2 to 4, and the thickness can be 1 to 20 μm. As the insulating film materials, UV (ultraviolet) curable resin materials, alkali-developable negative or positive insulating film materials, and heat-curable resin materials can be used, and the insulating film materials can be easily formed if they are alkali developing types.

The spacers 4 are formed by appropriately spraying uniformly sized polymer beads, glass beads, or the like. The bead particle size that defines the space between the second insulating film 3 formed on the first substrate and the Z electrodes is selected from 5 to 100 μm, and preferably from 20 to 50 μm. The density of the beads being sprayed, namely the distance between the adjacent beads, is preferably 20 μm or more and 10000 μm or less.

The transparent elastic layer 5 is a rubber-like layer having elasticity, and materials thereof are not particularly limited as long as they have elasticity. From the perspective of improving transmittance, materials that are transparent in the visible light region are preferred. For example, the following rubber materials can be used independently or in a mixture of two or more species: butyl rubber, fluoro rubber, ethylene-propylene-diene copolymer rubber (EPDM), acrylonitrile-butadiene rubber (NBR), chloroprene rubber (CR), natural rubber (NR), isoprene rubber (IR), styrene-butadiene rubber (SBR), butadiene rubber, ethylene-propylene rubber, silicon rubber, polyurethane rubber, polynorbornene rubber, styrene-butadiene-styrene rubber, epichlorohydrin rubber, hydrogenated NBR, polysulfide rubber, urethane rubber, and the like. These rubber or resin materials preferably have a refractive index of 1.4 to 1.8, and the film thickness is preferably 5 μm or more to be greater than the bead diameter of the spacers 4 (i.e., the thickness of the spacers 4) in order to allow sufficient deformation upon pressing.

The Z electrodes ZP are formed by a transparent conductive film but are not particularly limited as long as they are a thin film having conductive properties. The transparent conductive film can be made of existing materials such as indium tin oxide (ITO), antimony tin oxide (ATO), or indium zinc oxide (IZO). The transparent conductive film is formed by a sputtering method so as to have surface resistance of 500 to 2000 Ω, followed by deposition of resist materials and patterning with exposure and developing processes so as to have a shape corresponding to the X and Y electrodes. In this case, the resist materials may be positive or negative types and can be easily formed if they are alkali developing types. Thereafter, the ITO pattern is formed by etching. In this case, as an etching solution, hydrobromic acid solution or the like can be used. Moreover, if the Z electrodes ZP are formed so as to have surface resistance of 10000 to 10000000 $\Omega$, the patterning is not necessary. In addition to a thin film in which fine particles of the existing materials such as indium tin oxide (ITO), antimony tin oxide (ATO), or indium zinc oxide (IZO) are dispersed in a transparent resin, other thin films may be used in which conductive fine particles are dispersed in a resin. The conductive fine particles may be metallic fine particles of nickel, gold, silver, or copper, and insulating inorganic or resin-type fine particles which are plated with metals. Furthermore, there may be used fine particles composed of at least one metal oxide, or metal fluoride, selected from the group consisting of $Al_2O_3$, $Bi_2O_3$, $CeO_2$, $In_2O_3$, $(In_2O_3\text{-}SnO_2)$, $HfO_2$, $La_2O_3$, $MgF_2$, $Sb_2O_5$, $(Sb_2O_s,SnO_2)$, $SiO_2$, $SnO_2$, $TiO_2$, $Y_2O_3$, ZnO, and $ZrO_2$. Furthermore, the following organic conductive materials may be used: polyaniline, polyacetylene, polyethylenedioxythiophene, polypyrrole, polyisothianaphthene, polyisonaphthiophene, and the like. Moreover, preferably, the Z electrodes are appropriately selected from materials that cause less absorption and scattering of light due to refraction or reflection of light.

The material of the second transparent substrate 6 is not particularly limited, but inorganic glasses such as barium borosilicate glass or soda glass, chemically reinforced glasses, and the like are not preferable since there is a need to transfer compressive force resulting from pressing to the transparent elastic layer 5. However, such materials can be used as long as they are 300 $\mu$m or less in thickness. Therefore, the materials of the second transparent substrate 6 are preferably selected from flexible resins such as polyethersulfone (PES), polysulfone (PSF), polycarbonate (PC), polyarylate (PAR), or polyethylene terephthalate (PET), or materials in which elastomeric components are added to such resin materials in order to improve flexibility. Moreover, to meet the flexibility requirements, the thickness of the second transparent substrate 6 is preferably 800 $\mu$m or less. Furthermore, when a substrate having a thickness of 100 $\mu$m or less is used as the second transparent substrate 6, the amount of deformation upon application of a great load is great, and the second transparent substrate 6 and the transparent elastic layer 5 can be easily delaminated at their interface. Therefore, the thickness of the second transparent substrate 6 is preferably 100 $\mu$m or more.

Next, a capacitance change when a touch operation is made on the touch panel 101 according to the first embodiment of the present invention will be described with reference to Figs. 4A and 4B.

Figs. 4A and 4B are schematic diagrams showing the capacitance change when the distance between the X electrode XP and the Z electrode ZP and the distance between the Y electrode YP and the Z electrode ZP are changed in response to pressing during the touch, in which non-conductive input means is used for the touch operation. The same capacitance change may be realized with conductive input means (finger or the like) if the distance between the X electrode XP and the Z electrode ZP and the distance between the Y electrode YP and the Z electrode ZP are changed in response to the pressing.

The capacitance in the absence of the touch operation corresponds to the small inter-electrode capacitance between the X electrode XP1 and the Y electrode YP2 via the insulating film 2 disposed therebetween. It will be assumed that when the Z electrode ZP is pressed by the touch, the capacitance between the Z electrode ZP and the X electrode XP1 is Cxza, and the capacitance between the Z electrode ZP and the Y electrode YP2 is Cyza. When the capacitance detection portion 102 detects the electrode capacitance of the X electrode XP1, the Y electrode YP2 is reset to the GND potential. Thus, the combined capacitance when seen from the X electrode XP1 will be the sum of the series capacitances Cxza and Cyza since the Z electrode ZP is in the floating state. In this case, the combined capacitance Cxpa of the X electrode can be expressed by the following expression.

$$Cxpa = Cxza \cdot Cyza / (Cxza + Cyza) \quad \ldots (1)$$

The arithmetic and control unit 103 calculates the capacitance Cxpa of the electrode XP1 in the presence of the touch operation as a signal component of the electrode XP1. Since the capacitance detection portion 102 is able to detect the electrode capacitance in the presence/absence of the touch operation, the arithmetic and control unit 103 is able to calculate the signal component of the electrode XP1.

As will be understood from the above description, the non-conductive input means also enables the detection of the input coordinates based on the change in the electrostatic capacitance since the distance between the X electrode XP and the Z electrode ZP and the distance between the Y electrode YP and the Z electrode ZP are changed in response to the pressing.

While the first embodiment has been described in detail, the touch panel of the present embodiment is not limited to the example shown in Fig. 2. For example, a non-conductive layer that is more rigid than the transparent elastic layer 5 may be provided between the Z electrode ZP and the transparent elastic layer 5 or opposite the transparent elastic layer 5 across the Z electrode ZP. Moreover, the transparent elastic layer 5 and the Z electrode ZP may be included in the same layer. For example, one layer composed of a transparent elastic conductive resin layer in which conductive fine particles are dispersed in a transparent resin may be used for the transparent elastic layer and Z electrode.

As described above, according to the present embodiment, since the touch of the non-conductive input means on the touch panel can cause a change in the distance between the capacitance detection X or Y electrode and the Z electrode disposed thereon, causing the capacitance change, it is possible to detect the input coordinates by the electrostatic capacitive coupling method.

[Second Embodiment]

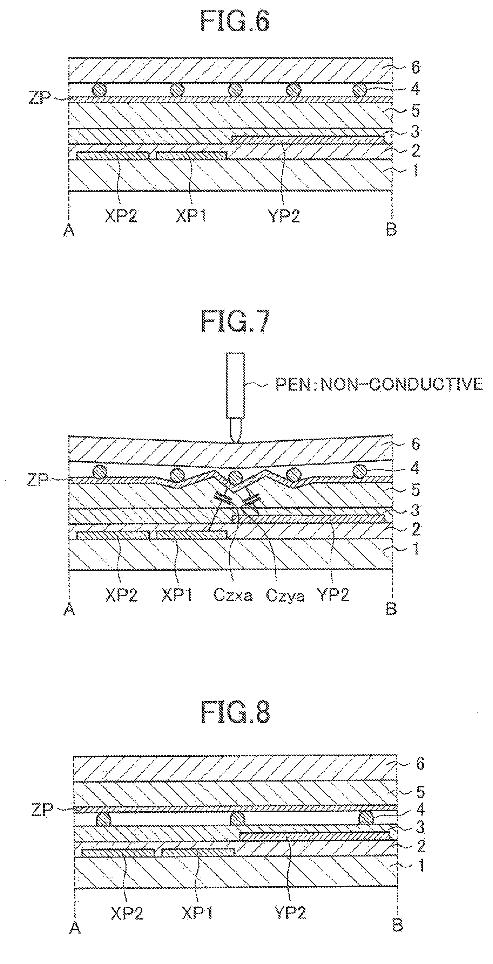

Fig. 6 is a configuration diagram of a touch panel 101 according to a second embodiment of the present invention and shows the sectional shape of the touch panel 101 taken along the line A-B in Fig. 3. The materials and properties of the respective layers are the same as those of the first embodiment, and description thereof will be omitted herein.

The touch panel 101 of the present embodiment has a stacked structure in which a transparent conductive film XP, a first transparent insulating film 2, a transparent conductive film YP, a second transparent insulating film 3, a transparent elastic layer 5, a Z electrode ZP, spacers 4 for maintaining a distance to the Z electrode, and a second transparent substrate 6 are successively stacked in that order on a first transparent substrate 1.

Next, a capacitance change when a touch operation is made on the touch panel 101 according to the second embodiment of the present invention will be described with reference to Fig. 7.

Fig. 7 is a schematic diagram showing the capacitance change when the distance between the X electrode XP and the Z electrode ZP and the distance between the Y electrode YP and the Z electrode ZP are changed in response to pressing during the touch, in which non-conductive input means is used for the touch operation. The same capacitance change may be realized with conductive input means (finger or the like) if the distance between the X electrode XP and the Z electrode ZP and the distance between the Y electrode YP and the Z electrode ZP are changed in response to the pressing.

The capacitance in the absence of the touch operation corresponds to the small inter-electrode capacitance between the X electrode XP1 and the Y electrode YP2 via the insulating film 2 disposed therebetween. It will be assumed that when the Z electrode ZP is pressed by the touch, the capacitance between the Z electrode ZP and the X electrode XP1 is Cxza, and the capacitance between the Z electrode ZP and the Y electrode YP2 is Cyza. When the capacitance detection portion 102 detects the electrode capacitance of the X electrode XP1, the Y electrode YP2 is reset to the GND potential. Thus, the combined capacitance when seen from the X electrode XP1 will be the sum of the series capacitances Cxza and Cyza since the Z electrode ZP is in the floating state. In this case, the combined capacitance Cxpa of the X electrode can be expressed by the expression (1) similar to the first embodiment.

The arithmetic and control unit 103 calculates the capacitance Cxpa of the electrode XP1 in the presence of the touch operation as a signal component of the electrode XP1. Since the capacitance detection portion 102 is able to detect the electrode capacitance in the presence/absence of the touch operation, the arithmetic and control unit 103 is able to calculate the signal component of the electrode XP1.

As will be understood from the above description, the non-conductive input means also enables the detection of the input coordinates based on the change in the electrostatic capacitance since the distance between the X electrode XP and the Z electrode ZP and the distance between the Y electrode YP and the Z electrode ZP are changed in response to the pressing.

Other things are the same as those described in the first embodiment.

As described above, according to the present embodiment, since the touch of the non-conductive input means on the touch panel can cause a change in the distance between the capacitance detection X or Y electrode and the Z electrode disposed thereon, causing the capacitance change, it is possible to detect the input coordinates by the electrostatic capacitive coupling method.

[Third Embodiment]

Fig. 8 is a configuration diagram of a touch panel 101 according to a third embodiment of the present invention and shows the sectional shape of the touch panel 101 taken along the line A-B in Fig. 3.

The touch panel 101 of the present embodiment has a stacked structure in which a transparent conductive film XP, a first transparent insulating film 2, a transparent conductive film YP, a second transparent insulating film 3, spacers 4 for maintaining a distance to a Z electrode, the Z electrode ZP, a transparent elastic layer 5, and a second transparent substrate 6 are successively stacked in that order on a first transparent substrate 1.

The spacers 4 are made of a light-curable resin material and can be configured as dot-shaped pillar spacers. The spacers 4 are preferably formed at intervals of 20 $\mu$m or more and 10000 $\mu$m or less by a screen printing method or the like. The spacers 4 may have a circular or rectangular shape and have a diameter of 5 to 100 $\mu$m, and preferably 20 to 50 $\mu$m.

The materials and properties of the other layers are the same as those of the first embodiment, and description thereof will be omitted herein.

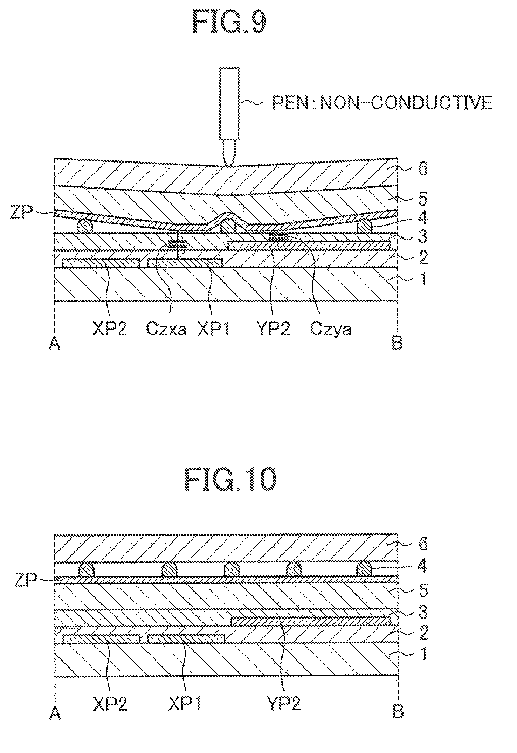

Next, a capacitance change when a touch operation is made on the touch panel 101 according to the third embodiment of the present invention will be described with reference to Fig. 9.

Fig. 9 is a schematic diagram showing the capacitance change when the distance between the X electrode XP and the Z electrode ZP and the distance between the Y electrode YP and the Z electrode ZP are changed in response to pressing during the touch, in which non-conductive input means is used for the touch operation. The same capacitance change may be realized with conductive input means (finger or the like) if the distance between the X electrode XP and the Z electrode ZP and the distance between the Y electrode YP and the Z electrode ZP are changed in response to the pressing.

The capacitance in the absence of the touch operation corresponds to the small inter-electrode capacitance between the X electrode XP1 and the Y electrode YP2 via the insulating film 2 disposed therebetween. It will be assumed that when the Z electrode ZP is pressed by the touch, the capacitance between the Z electrode ZP and the X electrode XP1 is Cxza, and the capacitance between the Z electrode ZP and the Y electrode YP2 is Cyza. When the capacitance detection portion 102 detects the electrode capacitance of the X electrode XP1, the Y electrode YP2 is reset to the GND potential. Thus, the combined capacitance when seen from the X electrode XP1 will be the sum of the series capacitances Cxza and Cyza since the Z electrode ZP is in the floating state. In this case, the combined capacitance Cxpa of the X electrode can be expressed by the expression (1) similar to the first embodiment.

The arithmetic and control unit 103 calculates the capacitance Cxpa of the electrode XP1 in the presence of the touch operation as a signal component of the electrode XP1. Since the capacitance detection portion 102 is able to detect the electrode capacitance in the presence/absence of the touch operation, the arithmetic and control unit 103 is able to calculate the signal component of the electrode XP1.

As will be understood from the above description, the non-conductive input means also enables the detection of the input coordinates based on the change in the electrostatic capacitance since the distance between the X electrode XP and the Z electrode ZP and the distance between the Y electrode YP and the Z electrode ZP are changed in response to the pressing.

Other things are the same as those described in the first embodiment.

As described above, according to the present embodiment, since the touch of the non-conductive input means on the touch panel can cause a change in the distance between the capacitance detection X or Y electrode and the Z electrode disposed thereon, causing the capacitance change, it is possible to detect the input coordinates by the electrostatic capacitive coupling method.

[Fourth Embodiment]

Fig. 10 is a configuration diagram of a touch panel 101 according to a fourth embodiment of the present invention and shows the sectional shape of the touch panel 101 taken along the line A-B in Fig. 3.

The touch panel 101 of the present embodiment has a stacked structure in which a transparent conductive film XP, a first transparent insulating film 2, a transparent conductive film YP, a second transparent insulating film 3, a transparent elastic layer 5, a Z electrode ZP, spacers 4 for maintaining a distance to the Z electrode, and a second transparent substrate 6 are successively stacked in that order on a first transparent substrate 1.

The spacers 4 are made of a light-curable resin material and can be configured as dot-shaped pillar spacers. The spacers 4 are preferably formed at intervals of 20 $\mu$m or more and 10000 $\mu$m or less by a screen printing method or the like. The spacers have a circular or rectangular shape and have a diameter of 5 to 100 $\mu$m, and preferably 20 to 50 $\mu$m.

The materials and properties of the other layers are the same as those of the first embodiment, and description thereof will be omitted herein.

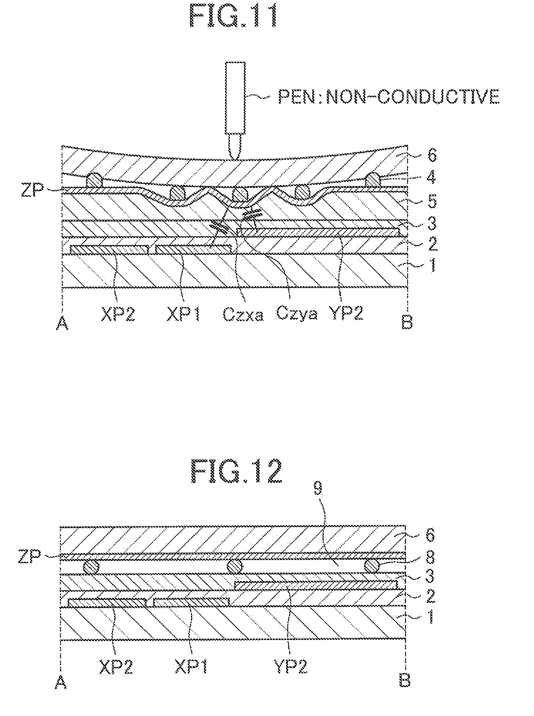

Next, a capacitance change when a touch operation is made on the touch panel 101 according to the fourth embodiment of the present invention will be described with reference to Fig. 11.

Fig. 11 is a schematic diagram showing the capacitance change when the distance between the X electrode XP and the Z electrode ZP and the distance between the Y electrode YP and the Z electrode ZP are changed in response to pressing during the touch, in which non-conductive input means is used for the touch operation. The same capacitance change may be realized with conductive input means (finger or the like) if the distance between the X electrode XP and the Z electrode ZP and the distance between the Y electrode YP and the Z electrode ZP are changed in response to the pressing.

The capacitance in the absence of the touch operation corresponds to the small inter-electrode capacitance between the X electrode XP1 and the Y electrode YP2 via the insulating film 2 disposed therebetween. It will be assumed that when the Z electrode ZP is pressed by the touch, the capacitance between the Z electrode ZP and the X electrode XP1 is Cxza, and the capacitance between the Z electrode ZP and the Y electrode YP2 is Cyza. When the capacitance detection portion 102 detects the electrode capacitance of the X electrode XP1, the Y electrode YP2 is reset to the GND potential. Thus, the combined capacitance when seen from the X electrode XP1 will be the sum of the series capacitances Cxza and Cyza since the Z electrode ZP is in the floating state. In this case, the combined capacitance Cxpa of the X electrode can be expressed by the expression (1) similar to the first embodiment.

The arithmetic and control unit 103 calculates the capacitance Cxpa of the electrode XP1 in the presence of the touch operation as a signal component of the electrode XP1. Since the capacitance detection portion 102 is able to detect the electrode capacitance in the presence/absence of the touch operation, the arithmetic and control unit 103 is able to calculate the signal component of the electrode XP1.

As will be understood from the above description, the non-conductive input means also enables the detection of the input coordinates based on the change in the electrostatic capacitance since the distance between the X electrode XP and the Z electrode ZP and the distance between the Y electrode YP and the Z electrode ZP are changed in response to the pressing.

Other things are the same as those described in the first embodiment.

As described above, according to the present embodiment, since the touch of the non-conductive input means on the touch panel can cause a change in the distance between the capacitance detection X or Y electrode and the Z electrode disposed thereon, causing the capacitance change, it is possible to detect the input coordinates by the electrostatic capacitive coupling method.

[Fifth Embodiment]

Fig. 12 is a configuration diagram of the touch panel according to a fifth embodiment of the present invention and shows the sectional shape of the touch panel 101 taken along the line A-B in Fig. 3. This sectional view shows only the layers that are necessary for description of the touch panel operation.

The touch panel of the present embodiment has a stacked structure in which a transparent conductive film XP, a first transparent insulating film 2, a transparent conductive film YP, a second transparent insulating film 3, elastic spacers 8 for maintaining a distance to a Z electrode, and the Z electrode ZP, and a second transparent substrate 6 are successively stacked in that order on a first transparent substrate 1.

In the figure, reference numerals 1 and 6 each denote a transparent substrate, 2 and 3 each denote an insulating film, 8 denotes elastic spacers, 9 denotes an air layer, and XP, YP, and ZP each denote a detection electrode.

The elastic spacers 8 are formed by appropriately spraying uniformly sized elastic polymer beads, elastic rubber beads, or the like. The bead particle size that defines the space between the second insulating film 3 formed on the first substrate and the Z electrodes can be 5 to 100 $\mu$m. If there is a small gap between the second insulating film 3 and the Z electrode, the Newton's ring may occur due to interference of external light, thus degrading the display performance. If there is a large gap between the second insulating film 3 and the Z electrode, the load necessary for detecting a touch increases. For this reason, the distance between the second insulating film 3 and the Z electrode is preferably 20 to 50 $\mu$m. The density of the beads being sprayed depends on the setting of the minimum load necessary for detecting a touch and the Young's modulus of the material of the elastic spacers, and is preferably one or more per 1 cm$^2$ to be able to detect two points at the same time. In order to prevent deterioration in the display performance resulting from reflection and absorption of light by the elastic spacers, the density of the bead to be sprayed is preferably 400 or more per 1 cm$^2$.

The elastic spacers 8 are of rubber-like materials having elasticity, and materials thereof are not particularly limited as long as they have elasticity. In order to decrease the minimum load necessary for detecting a touch, materials having a low Young's modulus are preferred, and materials having a Young's modulus of 100 MPa or less are particularly preferable. Moreover, materials having a Young's modulus of 1 MPa or less may also be used; however, in such a case, the material of the elastic spacers may undergo plastic deformation, and thus, the Young's modulus of the material of the elastic spacers is preferably 1 MPa or more. For example, the following rubber materials can be used independently or in a mixture of two or more species: butyl rubber, fluoro rubber, ethylene-propylene-diene copolymer rubber (EPDM), acrylonitrile-butadiene rubber (NBR), chloroprene rubber (CR), natural rubber (NR), isoprene rubber (IR), styrene-butadiene rubber (SBR), butadiene rubber, ethylene-propylene rubber, silicon rubber, polyurethane rubber, polynorbornene rubber, styrene-butadien-styrene rubber, epichlorohydrin rubber, hydrogenated NBR, polysulfide rubber, urethane rubber, and the like.

An anti-reflection film may be formed on the surface of the Z electrode ZP so as to suppress interfacial reflection and thus increase the transmittance of visible light of the touch panel.

The material of the second transparent substrate 6 is not particularly limited, but inorganic glasses such as barium borosilicate glass or soda glass, chemically reinforced glasses, and the like are not preferable since there is a need to transfer compressive force resulting from pressing to the elastic spacers 8. However, such materials can be used as long as they are 300 $\mu$m or less in thickness. Therefore, the materials of the second transparent substrate 6 are preferably selected from flexible resin materials such as polyethersulfone (PES), polysulfone (PSF), polycarbonate (PC), polyarylate (PAR), or polyethylene terephthalate (PET), or materials in which elastomeric components are added to such resin materials in order to improve flexibility.

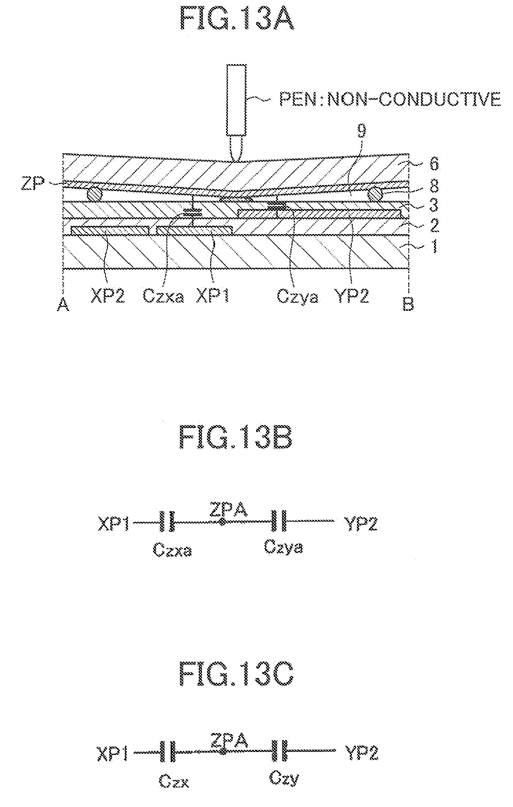

Next, a capacitance change when a touch operation is made on the touch panel 101 according to the fifth embodiment of the present invention will be described with reference to Figs. 13A to 13C.

Figs. 13A to 13C are schematic diagrams showing the capacitance change when the distance between the X electrode XP and the Z electrode ZP and the distance between the Y electrode YP and the Z electrode ZP are changed in response to pressing during the touch, in which non-conductive input means is used for the touch operation. The same capacitance change may be realized with conductive input means (finger or the like) if the distance between the X electrode XP and the Z electrode ZP and the distance between the Y electrode YP and the Z electrode ZP are changed in response to the pressing.

The capacitance between the adjacent X and Y electrodes corresponds to the combined capacitance of the capacitance (not shown) between the X and Y electrodes via the insulating film disposed therebetween and the parallel plate capacitances formed by the Z electrodes ZP and the X and Y electrodes. Here, it will be assumed that the capacitance between the X electrode (XP1) and the Z electrode in the absence of the touch operation is Czx (not shown), and the capacitance between the Y electrode (YP2) and the Z electrode is Czy (not shown). Here, when the Z electrode ZP is pressed by the pressing during the touch operation as shown in Fig. 13A, the distance between the Z electrode and the X and Y electrodes decreases, and accordingly the parallel plate capacitance will increase. Here, when it is assumed that the capacitance between the X electrode XP1 and the Z electrode ZP and the capacitance between the Y electrode YP2 and the Z electrode ZP in the presence of the touch operation are Czxa and Czya, respectively, the following expressions are satisfied.

$$Czxa>Czx \ ... \ (2)$$

$$Czya>Czy \ ... \ (3)$$

Since the Z electrode ZP is in the floating state, the combined capacitances in the presence/absence of the touch operation can be considered as the series capacitances as shown in Figs. 13B and 13C. Therefore, the capacitance change ΔC between the adjacent X and Y electrodes resulting from the presence/absence of the touch operation can be expressed as the following expression.

$$\{Czxa{\cdot}Czx{\cdot}(Czya-Czy)+Czya{\cdot}Czy{\cdot}(Czxa-Czx)\} \ /$$

$$\{(Czx+Czy){\cdot}(Czxa+Czya)\} \ ... \ (4)$$

The capacitance detection portion 102 detects the capacitance of each electrode or the capacitance change resulting from the presence/absence of the touch operation as given by the expression (4). The arithmetic and control unit 103 calculates the coordinates of the touched position using the capacitance of each electrode or the capacitance change obtained by the capacitance detection portion 102 as a signal component.

As will be understood from the above description, the non-conductive input means also enables the detection of the input coordinates based on the change in the electrostatic capacitance since the distance between the X electrode XP and the Z electrode ZP and the distance between the Y electrode YP and the Z electrode ZP are changed in response to the pressing.

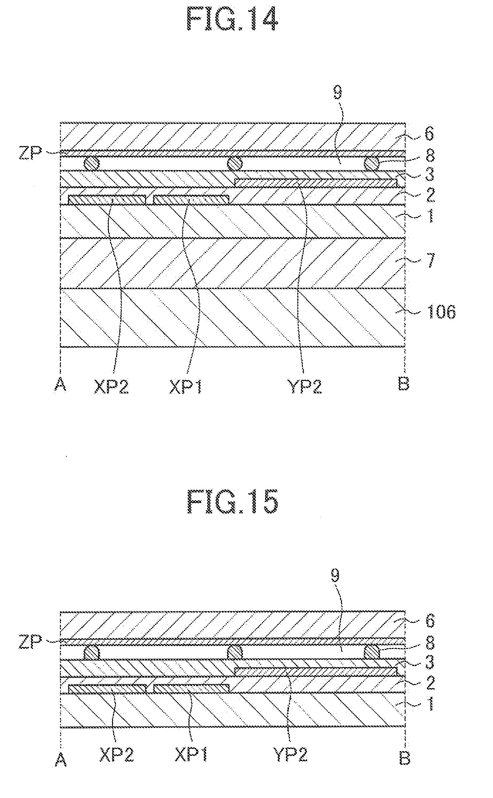

Fig. 14 is a cross-sectional view of the touch panel 101 and a display portion 106 according to the present embodiment. In the figure, a case where the touch panel 101 and the display portion 106 are attached to each other by an adhesive layer 7 is shown. The adhesive layer 7 may be formed by a method of depositing resin materials having adhesive properties to form a single layer having a thickness of 100 μm or more or a method of bonding a single layer of adhesive resin sheet having a thickness of 100 μm or more. As a deposition-type resin material having adhesive properties, silicon-based resin, urethane-based resin, epoxy-based resin, polyester-based resin, acryl-based resin, and the like can be used. Among them, it is preferable to include acryl-based resin having adhesive properties from the perspectives of durability such as heat resistance, moisture resistance, and light resistance, transparency, and costs (versatility).

The deposition method used in this process is not particularly limited as long as the method is capable of uniformly depositing a coating solution. The following methods can be used: bar coating, blade coating, spin coating, die coating, slit reverse coating, 3-roll reverse coating, comma coating, roll coating, dip coating, and the like.

The thickness of the coating film is preferably 100 $\mu$m to 1500 $\mu$m, and more preferably 500 $\mu$m to 1000 $\mu$m.

Subsequently to the deposition process, in order to polymerize photopolymerizable monomers contained in the coating solution of the resin material deposited by the deposition process, the resin material is irradiated with ultraviolet rays for 10 to 180 seconds with illumination intensity of 1 mW/cm$^2$ or more and 100 mW/cm$^2$ or less.

As the adhesive sheet-like material having adhesive properties, acryl-based adhesive, vinyl acetate-based adhesive, urethane-based adhesive, epoxy resin, vinylidene chloride-based resin, polyamide-based resin, polyester-based resin, synthetic rubber-based adhesive, silicon-based resin, and the like can be mentioned. Among them, acryl-based adhesive and silicon-based resin having high transparency are preferred. In addition, silicon-based resin is more preferable from the perspective of shock-absorbing performance.

With this adhesive layer 7, it is possible to eliminate the interface between the first transparent substrate 1 and the air layer and the interface between the display portion 106 and the air layer.

Other things are the same as those described in the first embodiment.

As described above, according to the present embodiment, since the touch of the non-conductive input means on the touch panel can cause a change in the distance between the capacitance detection X or Y electrode and the Z electrode disposed thereon, causing the capacitance change, it is possible to detect the input coordinates by the electrostatic capacitive coupling method. Moreover, even when the touch panel 101 is mounted on the display portion 106, it is possible to display a high-luminance and high-contrast image and thus improve the image quality of the display device.

[Sixth Embodiment]

Fig. 15 is a configuration diagram of the touch panel according to a sixth embodiment of the present invention and shows the sectional shape of the touch panel 101 taken along the line A-B in Fig. 3.

The display device of the present embodiment has a stacked structure in which a transparent conductive film XP, a first transparent insulating film 2, a transparent conductive film YP, a second transparent insulating film 3, elastic spacers 8 for maintaining a distance to a Z electrode, and the Z electrode ZP, and a second transparent substrate 6 are successively stacked in that order on a first transparent substrate 1.

The elastic spacers 8 are made of a light-curable elastic resin material and can be formed as dot-shaped pillar spacers which are formed on a side of the second insulating film 3 of the first transparent substrate close to the Z electrode or on a side of the Z electrode close to the first transparent electrode. The elastic spacers 8 are preferably formed at intervals of 500 $\mu$m or more and 10000 $\mu$m or less by a screen printing method or the like. The elastic spacers 8 have a circular or rectangular shape and have a diameter of 5 to 100 $\mu$m. If there is a small gap between the second insulating film 3 and the Z electrode, the Newton's ring may occur due to interference of external light, thus degrading the display performance. If there is a large gap between the second insulating film 3 and the Z electrode, the load necessary for detecting a touch increases. For this reason, the distance between the second insulating film 3 and the Z electrode is preferably 20 to 50 $\mu$m.

The elastic spacers 8 are of rubber-like materials having elasticity, and materials thereof are not particularly limited as long as they have elasticity. In order to decrease the minimum load necessary for detecting a touch, materials having a low Young's modulus are preferred, and materials having a Young's modulus of 100 MPa or less are particularly preferable. Moreover, materials having a Young's modulus of 1 MPa or less may also be used; however, in such a case, the material of the elastic spacers may undergo plastic deformation, and thus, the Young's modulus of the material of the elastic spacers is preferably 1 MPa or more. For example, the following elastomer materials can be used: styrene-based elastomer, olefin-based elastomer, polyester-based elastomer, polyamide-based elastomer, urethane-based elastomer, silicon-based elastomer, and the like. The elastomer materials are used as a mixture with acrylic resin, epoxy resin, polyolefin resin, or the like.

Furthermore, the following rubber materials can be used independently or in a mixture of two or more species: butyl rubber, fluoro rubber, ethylene-propylene-diene copolymer rubber (EPDM), acrylonitrile-butadiene rubber (NBR), chloroprene rubber (CR), natural rubber (NR), isoprene rubber (IR), styrene-butadiene rubber (SBR), butadiene rubber, ethylene-propylene rubber, silicon rubber, polyurethane rubber, polynorbornene rubber, styrene-butadiene-styrene rubber, epichlorohydrin rubber, hydrogenated NBR, polysulfide rubber, urethane rubber, and the like.

The materials and properties of the other layers are the same as those of the fifth embodiment, and description thereof will be omitted herein.

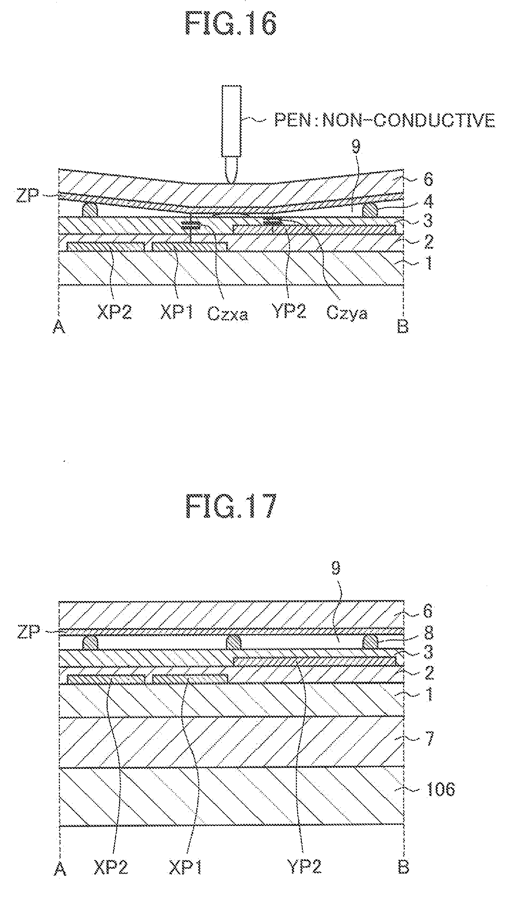

Next, a capacitance change when a touch operation is made on the touch panel 101 according to the sixth embodiment of the present invention will be described with reference to Fig. 16.

Fig. 16 is a schematic diagrams showing the capacitance change when the distance between the X electrode XP and the Z electrode ZP and the distance between the Y electrode YP and the Z electrode ZP are changed in response to pressing during the touch, in which non-conductive input means is used for the touch operation. The same capacitance change may be realized with conductive input means (finger or the like) if the distance between the X electrode XP and the Z electrode ZP and the distance between the Y electrode YP and the Z electrode ZP are changed in response to the pressing.

In the touch panel 101 according to the present embodiment, the distance between the X and Y electrodes and the Z electrode decreases in the presence of the touch operation, similar to Figs. 13A to 13C described in the fifth embodiment. Therefore, the capacitance change at that time can be expressed by the expression (4) similar to the fifth embodiment.

The capacitance detection portion 102 detects the capacitance of each electrode or the capacitance change resulting from the presence/absence of the touch operation as given by the expression (4). The arithmetic and control unit 103 calculates the coordinates of the touched position using the capacitance of each electrode or the capacitance change obtained by the capacitance detection portion 102 as a signal component.

As will be understood from the above description, the non-conductive input means also enables the detection of the input coordinates based on the change in the electrostatic capacitance since the distance between the X electrode XP and the Z electrode ZP and the distance between the Y electrode YP and the Z electrode ZP are changed in response to the pressing.

Moreover, the stacking method of the display portion 106 and the touch panel 101 is the same as that of the fifth embodiment as shown in Fig. 17, and description thereof will be omitted herein.

Other things are the same as those described in the fifth embodiment.

As described above, according to the present embodiment, since the touch of the non-conductive input means on the touch panel can cause a change in the distance between the capacitance detection X or Y electrode and the Z electrode disposed thereon, causing the capacitance change, it is possible to detect the input coordinates by the electrostatic capacitive coupling method. Moreover, even when the touch panel 101 is mounted on the display portion 106, it is possible to display a high-luminance and high-contrast image and thus improve the image quality of the display device.

While there have been described what are at present considered to be certain embodiments of the invention, it will be understood that various modifications may be made thereto, and it is intended that the appended claims cover all such modifications as fall within the true spirit and scope of the invention as defined in the appended claims. The above embodiments of the invention as well as the appended claims and figures show multiple characterizing features of the invention in specific combinations. The skilled person will easily be able to consider further combinations or sub-combinations of these features in order to adapt the invention as defined in the in the claims to his specific needs.

**Claims**

1. An electrostatic capacitive coupling-type touch panel comprising:

   a plurality of coordinate detection electrodes (XP1 - XP4, YP1 - YP4) for detecting XY position coordinates;
   a first substrate (1) (1) having the coordinate detection electrodes (XP1 - XP4, YP1 - YP4); and
   a second substrate (6) disposed to face the first substrate (1),
   wherein a conductive layer (ZP), a plurality of non-conductive spacers (4) arranged at intervals in a plane direction of the first and second substrates (6), and an elastic layer (5) that is less rigid than the first substrates (1), the second substrates (6) and the spacers (4) are provided between the first substrate (1) and the second substrate (6).

2. The electrostatic capacitive coupling-type touch panel according to claim 1,
   wherein the elastic layer (5) is provided between the second substrate (6) and the conductive layer (ZP), and
   wherein the spacers (4) are provided between the first substrate (1) and the conductive layer (ZP).

3. The electrostatic capacitive coupling-type touch panel according to one of the previous claims,
   wherein the conductive layer (ZP) and the elastic layer are included in the same layer which is an elastic conductive layer (ZP), and
   wherein the spacers (4) are provided between the elastic conductive layer (ZP) and the first substrate (1).

4. The electrostatic capacitive coupling-type touch panel according to one of the previous claims,
   wherein the elastic layer (5) is provided between the first substrate (1) and the conductive layer (ZP), and
   wherein the spacers (4) are provided between the second substrate (6) and the conductive layer (ZP).

5. The electrostatic capacitive coupling-type touch panel according to claim 2 or 4,
   wherein a non-conductive layer that is more rigid than the elastic layer (5) is provided between the conductive layer (ZP) and the elastic layer (5) or between the conductive layer (ZP) and the spacers (4).

6. The electrostatic capacitive coupling-type touch panel according to any one of claim 2-4,
   wherein the thickness of the elastic layer (5) is greater than the height of the spacers (4).

7. The electrostatic capacitive coupling-type touch panel according to claim 2 or 3,
   wherein an insulating film (2, 3) is provided on the coordinate detection electrodes (XP1 - XP4, YP1 - YP4), and
   wherein the spacers (4) are arranged to be able to come into contact with the insulating film (3).

8. An electrostatic capacitive coupling-type touch panel comprising:

   a plurality of coordinate detection electrodes (XP1 - XP4, YP1 - YP4) for detecting XY position coordinates;
   a first substrate (1) having the coordinate detection electrodes (XP1 - XP4, YP1 - YP4); and
   a second substrate (6) disposed to face the first substrate (1),
   wherein a conductive layer (XP, YP, ZP) is provided between the first substrate (1) and the second substrate
   (6), and a plurality of non-conductive spacers (4) arranged at intervals in a plane direction of the first substrates
   (1) and the second substrates (6) is provided between the conductive layer (XP, YP, ZP) and the first substrate
   (1), and
   wherein the spacers (4) are less rigid than the first substrates (1) and the second substrates (6) and the conductive
   layer (XP, YP, ZP).

9. The electrostatic capacitive coupling-type touch panel according to any one of claims 1-8,
   wherein the spacers (4) are beads.

10. The electrostatic capacitive coupling-type touch panel according to any one of claims 1-8,
    wherein the spacers (4) are protrusions which are formed on the first or second substrate (6).

11. The electrostatic capacitive coupling-type touch panel according to any one of claims 1-10,
    wherein the arrangement pitch of the spacers (4) is 20 $\mu$m or more and 10000 $\mu$m or less.

12. A display device with a touch panel comprising:

    a display device having a display portion; and
    the electrostatic capacitive coupling-type touch panel according to any one of claim 1-11 provided on the display
    portion.

# FIG.1

YP1
YP2
101
YP3
YP4
106

DETECTION
WIRINGS

102

XP1  XP2  XP3  XP4

DISPLAY SIGNAL

CAPACITANCE
DETECTION
SIGNAL

DETECTION
CONTROL
SIGNAL

103

105

I/F SIGNAL

DISPLAY CONTROL
SIGNAL

104

# FIG.2

ZP

6
5
4
3
2
1

A   XP2   XP1   YP2   B

# FIG.3

# FIG.4A

PEN:NON-CONDUCTIVE

ZP

6
5
4
3
2
1

XP2  Czxa  XP1  YP2  Czya

A                                    B

# FIG.4B

XP1 —||— ZPA —||— YP2
     Cxza      Cyza

GND

# FIG.5

65mm

YP1
YP2
YP3

Y ELECTRODE INTERVAL

50mm

X ELECTRODE INTERVAL

YPn

XP1  XP2  XP3                    XPm

## FIG.6

ZP · · · 6, 4, 5, 3, 2, 1

XP2  XP1  YP2

A · · · B

## FIG.7

PEN:NON-CONDUCTIVE

ZP · · · 6, 4, 5, 3, 2, 1

XP2  XP1  Czxa  Czya  YP2

A · · · B

## FIG.8

ZP · · · 6, 5, 4, 3, 2, 1

XP2  XP1  YP2

A · · · B

# FIG.9

PEN : NON-CONDUCTIVE

ZP

6
5
4
3
2
1

A  XP2  Czxa  XP1  YP2  Czya  B

# FIG.10

ZP

6
4
5
3
2
1

A  XP2  XP1  YP2  B

# FIG.11

PEN:NON-CONDUCTIVE

ZP

6
4
5
3
2
1

A    XP2    XP1    Czxa    Czya    YP2    B

# FIG.12

9

ZP

6
8
3
2
1

A    XP2    XP1    YP2    B

# FIG.13A

PEN:NON-CONDUCTIVE

ZP

A    XP2    Czxa    XP1    Czya    YP2    B

9
6
8
3
2
1

# FIG.13B

XP1 ──┤├── $\overset{ZPA}{\diamond}$ ──┤├── YP2
　　　　Czxa　　　　　Czya

# FIG.13C

XP1 ──┤├── $\overset{ZPA}{\diamond}$ ──┤├── YP2
　　　　Czx　　　　　Czy

# FIG.14

ZP

9

6
8
3
2
1
7
106

A    XP2    XP1    YP2    B

# FIG.15

ZP

9

6
8
3
2
1

A    XP2    XP1    YP2    B

# FIG.16

PEN:NON-CONDUCTIVE

9

6
4
3
2
1

ZP

XP2　XP1　Czxa　YP2　Czya

A　　　　　　　　　　　　　　B

# FIG.17

9

6
8
3
2
1

ZP

7

106

XP2　　XP1　　　　YP2

A　　　　　　　　　　　　　　B

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2003511799 T
- JP 2004005672 A